(19) Europäisches Patentamt
European Patent Office
Office européen des brevets

(11) **EP 1 361 641 B1**

(12) **EUROPEAN PATENT SPECIFICATION**

(45) Date of publication and mention
of the grant of the patent:
**12.01.2005 Bulletin 2005/02**

(51) Int Cl.⁷: **H02K 1/27**

(21) Application number: **03017958.4**

(22) Date of filing: **31.08.2001**

(54) **Permanent magnet rotor**

Dauermagnetläufer

Rotor à aimants permanents

(84) Designated Contracting States:
**DE FR IT SE**

(30) Priority: **31.08.2000 JP 2000263984**

(43) Date of publication of application:
**12.11.2003 Bulletin 2003/46**

(62) Document number(s) of the earlier application(s) in
accordance with Art. 76 EPC:
**01121013.5 / 1 184 956**

(73) Proprietor: **YAMAHA HATSUDOKI KABUSHIKI
KAISHA
Iwata-shi Shizuoka-ken (JP)**

(72) Inventors:
• **Naito, Shinya
Iwata-shi Shizuoka-Ken (JP)**
• **Hino, Haruyoshi
Iwata-shi Shizuoka-Ken (JP)**

(74) Representative: **Grünecker, Kinkeldey,
Stockmair & Schwanhäusser Anwaltssozietät
Maximilianstrasse 58
80538 München (DE)**

(56) References cited:
EP-A- 0 746 079          EP-A- 0 905 858
US-A- 4 924 130          US-A- 5 801 478

• PATENT ABSTRACTS OF JAPAN vol. 1997, no.
05, 30 May 1997 (1997-05-30) & JP 09 023598 A
(MATSUSHITA ELECTRIC IND CO LTD), 21
January 1997 (1997-01-21)
• PATENT ABSTRACTS OF JAPAN vol. 1999, no.
09, 30 July 1999 (1999-07-30) & JP 11 103547 A
(FUJITSU GENERAL LTD), 13 April 1999
(1999-04-13)
• PATENT ABSTRACTS OF JAPAN vol. 1999, no.
14, 22 December 1999 (1999-12-22) & JP 11
262205 A (FUJITSU GENERAL LTD), 24
September 1999 (1999-09-24)
• PATENT ABSTRACTS OF JAPAN vol. 1999, no.
01, 29 January 1999 (1999-01-29) & JP 10 271722
A (MATSUSHITA ELECTRIC IND CO LTD), 9
October 1998 (1998-10-09)
• PATENT ABSTRACTS OF JAPAN vol. 1997, no.
04, 30 April 1997 (1997-04-30) & JP 08 336247 A
(MATSUSHITA ELECTRIC IND CO LTD), 17
December 1996 (1996-12-17)

**Description**

This invention relates to a permanent magnet rotor with a rotor core having for each magnetic pole a plurality of permanent magnets, embedded in layers therein. A permanent magnet rotor can be used for constituting a permanent magnet type rotary electric device such as a permanent magnet electric motor and a permanent magnet generator, and particularly an embedded magnet type permanent magnet rotor, suited to an inner rotor type permanent magnet rotary electric device, capable of effecting decreased torque ripples and cogging torque.

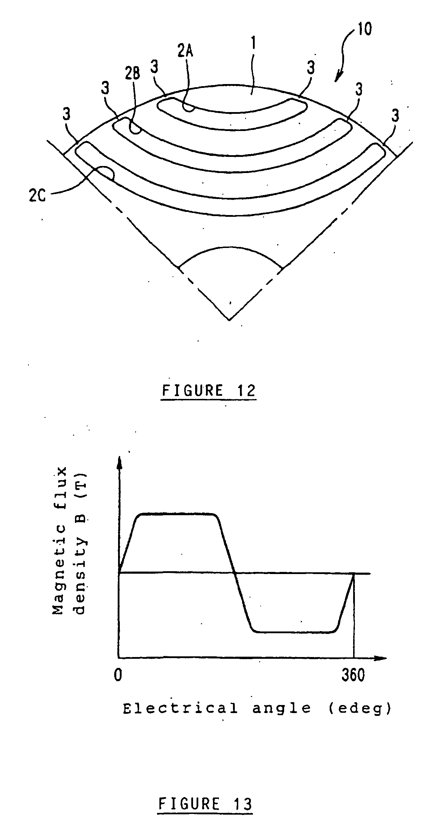

A conventional embedded magnet type permanent magnet rotor has been disclosed, for example, in Laid Open Japanese Patent Application Hei-11-262205 or Hei-11-206075, in which the permanent magnet rotor, as shown in Fig. 12 with respect to the shape of one pole in end view, has a rotor core 1 formed with a plurality of slits 2A, 2B, 2C in multiple layers. Each of the slits 2A-2C has an end face in the shape of an arc configured such that its longitudinal ends are located in the vicinity of the outside circumferential surface of the rotor core 1 and its longitudinal middle portion is located radially inwardly of the end portions, and extends to the opposite end of the rotor core 1 in the axial direction (perpendicular to the plane of Fig. 12), with the same cross sectional shape as the shape of the end face.

In order to form a permanent magnet rotor 10 having a rotor core 1 with permanent magnets embedded, bond magnet (plastic magnet) may be filled in the slits 2A-2C (or filled in a magnetic field) and solidified (that is, formed by injection molding), or permanent magnets machined respectively in the shapes of the slits 2A-2C, may be fitted in the slits 2A-2C. In addition, in the permanent magnet rotor 10 shown in Fig. 12, bridges 3 of a certain thickness are formed between the longitudinal ends (portions close to the outside circumferential surface of the rotor core 1) of the slits 2A-2C and the outside circumferential surface of the core 1 so that the radially outer portions (portions on the outside circumferential surface side) and the radially inner portions (portions on the center axis side) of the rotor core 1 with respect to the respective slits 2A-2C will not be perfectly separated by the slits 2A-2C.

However, in the conventional permanent magnet rotor 10 as described above, the distribution of magnetic flux density formed in the clearance between the rotor and the stator when the rotor is assembled in a rotary electric device, as shown in Fig. 13, is in the shape of approximately a rectangular wave, so that the distortion factor is large, resulting in increased torque ripples and cogging torque.

Therefore, it is an objective of the present invention to provide a permanent magnet rotor with a rotor core having an improved performance.

According to the present invention, said objective is solved for a permanent magnet rotor of the above kind in that the magnetic poles of said rotor core are constituted by recesses in which permanent magnets of different characteristics are embedded, wherein the residual magnetic flux density of said permanent magnets is smaller in the layer on the radially inner side of said rotor core than on the radially outer side thereof.

It is an advantage of the present invention to provide a permanent magnet rotor capable of effecting decreased torque ripples and cogging torque. Such an improved magnet rotor having a high performance is provided.

According to a preferred embodiment of the permanent magnet rotor, distances between said permanent magnets in end view of said rotor core are differentiated such that they are wider toward the longitudinal ends of the permanent magnets and narrower toward the longitudinal middle portions thereof.

Preferably, the recesses and the recess sections are formed as slits and slit sections.

Preferably, an angle made by two straight lines each connecting the respective one longitudinal ends of any adjacent permanent magnets in end view of said rotor core and the rotation center thereof, is smaller for the layers on the radially inner side of the rotor core than on the radially outer side thereof, smaller than an angle made by a straight line connecting the center of the magnetic pole and said rotation center and a straight line made by one longitudinal end of said permanent magnet constituting the radially outermost layer and said rotation center, and larger than an angle made by a straight line passing through the space between adjacent poles and said rotation center and a straight line connecting one longitudinal end of said permanent magnet constituting the radially innermost layer and said rotation center.

Preferably, a plurality of layers of magnets are provided in each magnetic pole, and supposing that electrical angles each made by two straight lines each connecting the respective opposite longitudinal ends of one layer of said permanent magnets in end view of said rotor core and the rotation center thereof, be $\theta_1$, $\theta_2$, $\theta_3$, ... $\theta_n$ in order as viewed from the outside circumference side of said rotor core, and amounts of total magnetic flux generated by said permanent magnet layers when said rotor core is assembled in a rotary electric device, be $\phi_1$, $\phi_2$, $\phi_3$,... $\phi_n$, the following equation is satisfied or approximately satisfied:

$$(\phi_1 - d_1 Bs) : (\phi_2 - d_2 Bs) : ... : (\phi_n - d_n Bs) =$$

$$\theta_1 \cos(\theta_1/4):$$

$$( \theta_2-\theta_1)\cos((\theta_2+\theta_1)/4) + \theta_1\cos(\theta_1/4) :$$

$$...: (\theta_n-\theta_{n-1})\cos((\theta_n+\theta_{n-1})/4)$$

$$+ (\theta_{n-1}-\theta_{n-2})\cos((\theta_{n-1}+\theta_{n-2})/4)$$

$$+...+(\theta_2-\theta_1)\cos((\theta_2+\theta_1)/4)$$

$$+ \theta_1\cos( \theta_1/4)$$

where di (i=1, 2, 3, ...n) represents the sum of widths of bridges each connecting the radially outer portions and the radially inner portions of the rotor core with respect to the respective recess sections in which said permanent magnets are embedded, for each layer, and Bs is a saturated magnetic flux density of said rotor core.

According to preferred embodiments, said permanent magnets are formed such that bond magnet is filled in said recesses and solidified.

Further preferably, in parts of said recess sections vacant slits are formed, in which no permanent magnets are embedded.

According to at least one of the embodiments, an amount of total magnetic flux generated by each permanent magnet on the radially inner side of said rotor core is larger than that on the radially outer side thereof when the rotor is assembled in a rotary electric device.

Preferred embodiments of the present invention are laid down in the dependent claims.

In the following, the present invention is explained in greater detail with respect to several embodiments thereof in conjunction with the accompanying drawings, wherein:

Fig. 1      is a view showing the configuration of a first embodiment,

Fig. 2      is a view illustrating the directions of magnetization,

Fig. 3      is a view showing the configuration of a second embodiment,

Fig. 4      is a view showing the configuration of a third embodiment,

Fig. 5      is a view showing the configuration of a fourth embodiment,

Fig. 6      is a view showing the configuration of a fifth embodiment,

Fig. 7      is a view showing the configuration of a sixth embodiment,

Fig. 8      is a view showing the configuration of a seventh embodiment,

Fig. 9      is a graph showing the distribution of magnetic flux density generated in the clearance between the rotor and the stator of a permanent magnet electric motor according to the embodiments,

Fig. 10     is a graph showing, in comparison, noise levels of a permanent magnet electric motor according to the embodiments and a conventional one;

Fig. 11     is a view of an example of a permanent magnet rotor with radially innermost magnets being used in common to adjacent magnet poles;

Fig. 12     is a view of the configuration of a conventional permanent magnet rotor; and

Fig. 13     is a graph showing a distribution of magnetic flux density generated in the clearance between the rotor and the stator of a conventional permanent magnet electric motor.

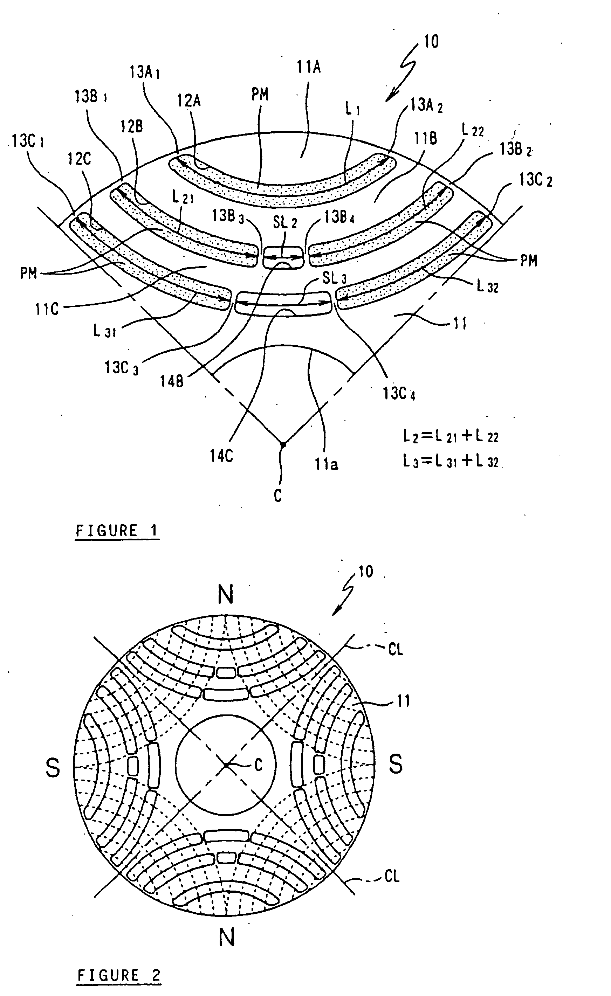

Fig. 1 is a view of a first embodiment, showing the shape of a pole of a permanent magnet rotor 10 used for an inner rotor type permanent magnet motor or the like, in end view.

That is, the permanent magnet rotor 10 has a rotor core 11 in the shape of a column made of numerous thin round blanked-out plates laminated, and the rotor core 11 is formed, at its center, with a shaft hole 11a in which unillustrated rotary shaft is adapted to be inserted coaxially.

The rotor core 11 is also formed with slit sections 12A, 12B, 12C of an arc convexed toward the shaft hole 11a, penetrating the rotor core 11 between both end faces thereof. The slit sections 12A-12C are arranged in layers concentrically such that the slit section 12A on the radially outermost side of the rotor core 11 is in the shape of an arc with a small diameter, the slit section 12C on the radially inner side is in the shape of and arc with a large diameter, and the intermediate slit section 12B is in the shape of an arc with a medium diameter.

In order for the radially outer portions 11A of the rotor core 11 with respect to the slit section 12A, of these slit sections 12A-12C, formed on the inside circumference side thereof not to be separated from the radially inner portion thereof, bridges $13A_1$, $13A_2$ are formed at the longitudinal ends of the slit section 12A in end view.

In addition, in order for the radially outer portions 11B of the rotor core 11 with respect to the intermediate slit section 12B not to be separated from the radially inner portion thereof, bridges $13B_1$, $13B_2$ are formed at the longitudinal ends of the slit section 12B in end view, and bridges $13B_3$, $13B_4$ are also formed at two locations in the middle thereof.

Further, in order for the radially outer portions 11C of the rotor core 11 with respect to the slit section 12C formed on the inside circumference side thereof not to be separated from the radially inner portion thereof, bridges $13C_1$, $13C_2$ are formed at the longitudinal ends of the slit section 12C in end view, and bridges $13C_3$, $13C_4$ are also formed at two locations in the middle thereof.

In the slit sections 12A-12C, that is, in the whole slit 12A, the portions defined between the bridges $13B_1$, $13B_3$ and between the bridges $13B_2$, $13B_4$ of the slit section 12B, and the portions between bridges $13C_1$, $13C_3$ and between bridges $13C_2$, $13C_4$ of the slit section 12C, are embedded permanent magnets PM, of the same characteristic, magnetized in the direction of width of the slits 12A-12C in end view. The permanent magnets PM may be formed by bond magnet being filled in the slit sections 12A-12C at the portion described above, solidified, and then magnetized. For a small and powerful permanent magnet PM, anisotropic bond magnet may be used to form permanent magnets PM orientated in the direction of thickness, by in-magnetic field injection molding.

On the other hand, in the portion defined between bridges $13B_3$, $13B_4$ of the slit section 12B and the portion defined between bridges $13C_3$, $13C_4$ of the slit section 12C, are embedded no permanent magnets, that is, these portions are vacant slits 14B, 14C.

The vacant slits 14B, 14C are formed in the slit sections 12B, 12C approximately at the longitudinal middle portions, and have a symmetrical shape with respect to the center line of the magnetic pole. The slit 14C formed in the slit section 12C on the inside circumference side is larger than that formed in the intermediate slit section 12B.

Supposing that lengths of the permanent magnets PM embedded in the slit sections 12A-12C, be $L_1$, $L_2 = (L_{21}+L_{22})$, and $L_3=(L_{31}+L_{32})$ in order as viewed from the outside circumference side of the rotor core 11, where magnet lengths $L_1$-$L_3$ are distances between the longitudinal ends of the magnets along the slit sections 12A-12C, respectively, not including widths of bridges $13A_1$, $13A_2$, $13B_1$, $13B_2$, $13C_1$, $13C_2$ at the ends, widths of the bridges $13B_3$, $13B_4$, $13C_3$, $13C_4$ at the middle portions, and lengths of the vacant slits 14B, 14C ($SL_2$, $SL_3$), the following expressions (2), (3) are satisfied in this embodiment:

$$SL_2 < SL_3 \qquad (2),$$

$$L_1 < L_2 < L_3 \qquad (3).$$

Therefore, since the relation as shown in the expression (3) is true, the relation between the amounts of total magnetic flux $\Phi_1$, $\Phi_2$, $\Phi_3$ each generated by the respective permanent magnets PM embedded in the slit sections 12A-12C can be expressed as:

$$\Phi_1 < \Phi_2 < \Phi_3 \qquad (4).$$

Fig. 2 is a view of the shape of the whole end face of the permanent magnet rotor 10 in this embodiment, showing directions of orientation and magnetization of the permanent magnets. That is, the permanent magnet rotor 10 have four magnetic poles N, S, and directions of orientation and magnetization of the magnets PM are tangential ones of concentric circles with a center on straight lines CL passing through the rotation center C of the rotor core 11 along the boundaries between magnetic poles.

In this embodiment of the permanent magnet rotor 10, the expressions (2) - (4) are satisfied, so that the distribution of magnetic flux density formed in the clearance between the rotor and the stator when the rotor is assembled in a rotary electric device, has a stepped shape close to a sinusoidal wave. Therefore, in this embodiment of the permanent magnet 10, the distortion factor of the waveform of induced voltage is decreased compared with a conventional permanent magnet rotor, as well as torque ripples and cogging torque, and noises and vibrations.

In addition, in this embodiment of the permanent magnet rotor 10, with the vacant slits 14B, 14C utilized, the distribution of magnetic flux density formed in the clearance described above has a stepped shape close to a sinusoidal wave, so that it is unnecessary to take actions of partially narrowing the distances between the slit sections 12A, 12B, 12C, and the distances between layers are approximately constant over the entire length of the slits, as shown in Fig. 1, thereby avoiding a drop in reluctance torque.

While the positions of the vacant slits 14B, 14C are not specifically limited, they are located, in this embodiment, in the slit sections 12B, 12C at the longitudinal middle portions, respectively. Since the longitudinal middle portions of the slit sections 12B, 12C are located at positions, as seen from Fig. 2, where the magnetic flux doesn't reach easily and its control is difficult during orientation and magnetization, if the vacant slits 14B, 14C in which no magnetic flux are generated by nature, are formed, in this embodiment, in such regions in which appropriate orientation and magnetization are difficult to achieve, the permanent magnet can be utilized efficiently.

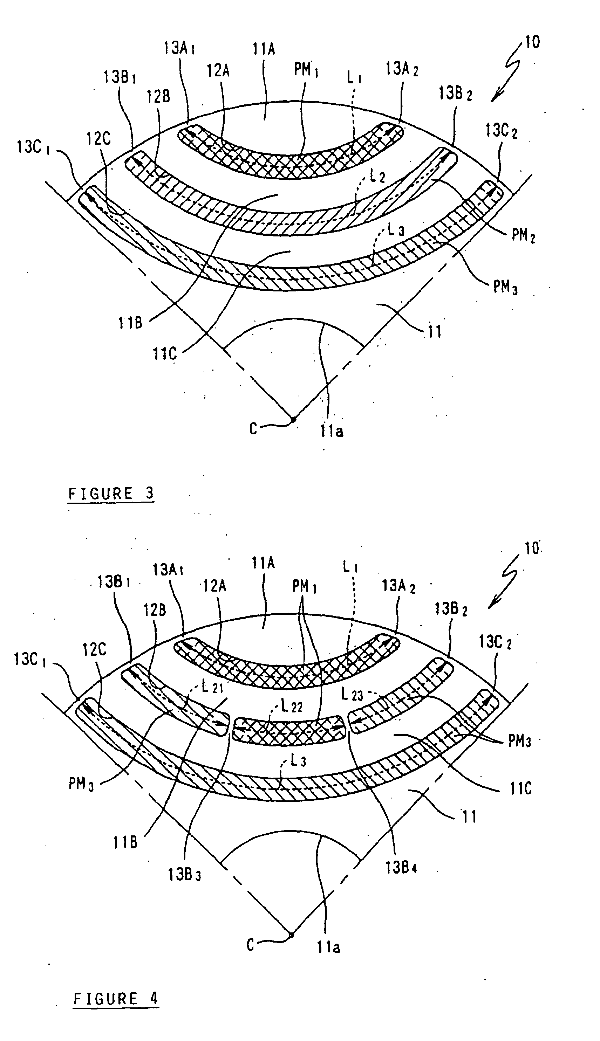

Fig. 3 is a view of a second embodiment, showing the shape of one pole of the permanent magnet rotor 10 in end view, as in Fig. 1. Like formations as in the first embodiment are designated by like symbols and repeated description is omitted.

That is, also in this embodiment, as in the first embodiment, three layers of slit sections 12A-12C are provided, but no vacant slit is formed in any of the slit sections 12A-12C. On the other hand, permanent magnets $PM_1$, $PM_2$, $PM_3$ each embedded in the respective slit sections 12A-12C, are of different characteristics. That is, in the first embodiment, permanent magnets of the same characteristic are embedded in the slit sections 12A-12C, while in this embodiment, three kinds of permanent magnets of different characteristics are contained in a magnetic pole.

If values of residual magnetic flux density of the permanent magnets $PM_1$, $PM_2$, $PM_3$ be $Br_1$, $Br_2$, and $Br_3$, respectively, the following expression is satisfied:

$$Br_1 > Br_2 > Br_3 \tag{5}$$

In addition, if amounts of total magnetic flux generated by the permanent magnets $PM_1$, $PM_2$, $PM_3$ when the rotor is assembled in a rotary electric device, be $\Phi_1$, $\Phi_2$, $\Phi_3$. respectively, the following expression is satisfied:

$$\Phi_1 < \Phi_2 < \Phi_3 \tag{6}$$

Also in this embodiment of the permanent magnet rotor 10, the foregoing expressions (5), (6) are satisfied, so that the distribution of magnetic flux density formed in the clearance between the rotor and the stator when the rotor is assembled in a rotary electric device, has a stepped shape close to a sinusoidal wave, producing the effect of decreased torque ripples and cogging torque, as in the first embodiment.

In addition, in this embodiment, no vacant slit is provided, so that the permanent magnets $PM_1$-$PM_3$ can be embedded more efficiently in the rotor core, thereby providing an favorable construction to size reduction of the permanent magnet rotor 10.

Fig. 4 is a view of a third embodiment, showing the shape of one pole of the permanent magnet rotor 10 in end view, as in Fig. 1. Like formations as in the first and second embodiments are designated by like symbols and repeated description is omitted.

That is, the permanent magnet rotor 10 of this embodiment is approximately the same as that in the second embodiment, except that'bridges $13B_3$, $13B_4$ are formed at two locations longitudinally of the slit section 12B such that the slit section is divided into three equal segments, a permanent magnet $PM_1$ is embedded in a segment defined by bridges $13B_3$, $13B_4$, and permanent magnets $PM_3$ are embedded in segments defined by bridges $13B_1$, $13B_3$ and by bridges $13B_2$, $13B_4$. That is, in this embodiment, while three slit sections 12A-12C are provided as in the second embodiment, two kinds of permanent magnets $PM_1$, $PM_3$ are used, so that the number of kinds of permanent magnets is smaller than in the second embodiment.

. In such an arrangement, the mean residual magnetic flux density $Br_2'$ of the permanent magnets $PM_1$, $PM_3$ embedded in the slit section 12B is written as:

where $L_{21}$, $L_{22}$, $L_{23}$ are lengths of the magnets in the corresponding segments of the slit section 12B, as shown in Fig. 4.

$$Br_2' = \{L_{22}Br_1 + (L_{21}+L_{23})\,Br_3\} / (L_{21}+L_{22}+L_{23}) \tag{7}$$

In this embodiment, the following expressions are satisfied:

$$Br_1 > Br_2' > Br_3 \tag{8},$$

$$\Phi_1 < \Phi_2 < \Phi_3 \tag{9}.$$

Therefore, also in this embodiment, as in the first and second embodiments, the distribution of magnetic flux density formed in the clearance between the rotor and the stator when the rotor is assembled in a rotary electric device, has a stepped shape close to a sinusoidal wave, producing the effect of decreased torque ripples and cogging torque.

In this embodiment, two kinds of permanent magnets $PM_1$, $PM_3$ are enough to meet given requirement, so that the number of kinds of magnets is smaller compared with that in the second embodiment, providing more favorable construction to cost reduction.

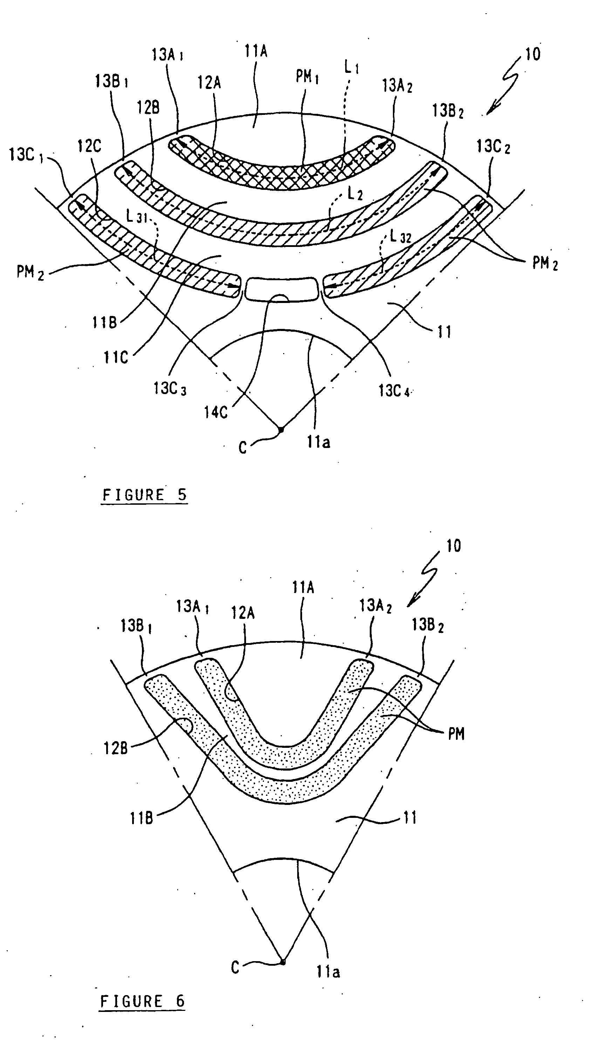

Fig. 5 is a view of a fourth embodiment, showing the shape of one pole of the permanent magnet rotor 10 in end view, as in Fig. 1. Like configurations as in the first through third embodiments are designated by like symbols and repeated description is omitted.

That is, the permanent magnet rotor 10 of this embodiment is approximately the same as that in the third embodiment, except that bridges $13C_3$, $13C_4$ are formed in the slit section 12C near the middle portion, as in the first embodiment, in a segment defined by the bridges $13C_3$, $13C_4$ are formed a vacant slit 14C in which no permanent magnet is embedded, and in segments defined by bridges $13C_1$, $13C_3$ and by bridges $13C_2$, $13C_4$ are embedded permanent magnets $PM_2$.

In this embodiment, the following expression is satisfied:

$$\Phi_1 < \Phi_2 < \Phi_3 \tag{10}.$$

Therefore, also in this embodiment, as in the first and second embodiments, the distribution of magnetic flux density formed in the clearance between the rotor and the stator when the rotor is assembled in a rotary electric device, has a stepped shape close to a sinusoidal wave, producing the effect of decreased torque ripples and cogging torque.

Fig. 6 is a view of a fifth embodiment, showing the shape of one pole of the permanent magnet rotor 10 in end view, as in Fig. 1. Like configurations as in the first through the fourth embodiment are designated by like symbols and repeated description is omitted.

That is, in this embodiment of the permanent magnet rotor 10, the permanent magnets PM are arranged in two layers (n=2), and the slit sections 12A, 12B have the shape of, not an arc, but a letter U. In this embodiment, no vacant slit is formed in the slit section 12B, and the distance (width of the radially outer portion 11B) between the slit sections 12A, 12B in which permanent magnets PM are embedded, is differentiated such that it is wider toward the longitudinal ends of the permanent magnets PM and narrower toward the centers thereof.

Also in such an arrangement, the distribution of magnetic flux density formed in the clearance between the rotor and the stator when the rotor is assembled in a rotary electric device, has a stepped shape close to a sinusoidal wave. Therefore, according to this embodiment of the permanent magnet rotor 10, compared with a conventional permanent magnet rotor, the distortion factor of the waveform of induced voltage is decreased, as well as torque ripples and cogging torque, and noises and vibrations.

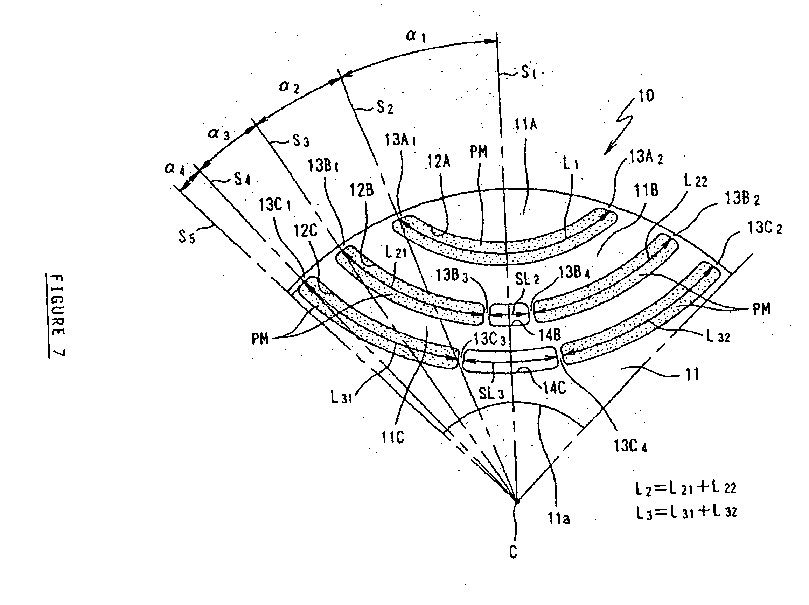

Fig. 7 is a view of a sixth embodiment, showing the shape of one pole of the permanent magnet rotor 10 in end view, as in Fig. 1. Like configurations as in the first through the fifth embodiment are designated by like symbols and repeated description is omitted.

That is, the arrangement of this embodiment is approximately the same as in the first embodiment, except that the relation between four angles $\alpha_1$, $\alpha_2$, $\alpha_3$, $\alpha_4$, which is not limited in the first embodiment, is written as:

$$\alpha_1 > \alpha_2 > \alpha_3 > \alpha_4 \tag{11}$$

where $\alpha_1$ is an angle made by a straight line S1 connecting the center of the magnetic pole and the rotation center C of the rotor core 11 and a straight line $S_2$ connecting one longitudinal end of the permanent magnet PM embedded in the slit 12A and the rotation center C, $\alpha_2$ is an angle made by two straight lines $S_2$, $S_3$ each connecting the respective one longitudinal ends of the permanent magnets embedded in adjacent two slits 12A, 12B and the rotation center C, $\alpha_3$ is an angle, like $\alpha_1$ made by a straight line $S_1$ connecting the center of the magnetic pole and the rotation center C of the rotor core 11 and a straight line $S_2$ connecting one longitudinal end of the permanent magnet PM embedded in the slit 12A and the rotation center C, and $\alpha_4$ is an angle made by a straight line $S_5$ (the same line as the straight line CL shown in Fig. 2) passing between the adjacent poles and through the rotation center C and a straight line $S_4$ connecting one longitudinal end of the permanent magnet PM embedded in the slit 12C constituting the innermost layer and the rotation center C.

In such an arrangement, the shape of the distribution of magnetic flux density formed in the clearance between the rotor and the stator when the rotor is assembled in a rotary electric device, can be made closer to a sinusoidal wave compared with when the relation between angles $\alpha_1 - \alpha_4$ doesn't satisfy the expression (11), thereby providing more remarkable reduction in the distortion factor of the waveform of induced voltage, torque ripples and cogging torque as well as noises and vibrations.

Fig. 8 is a view showing the configuration of a seventh embodiment. The arrangement of this embodiment is approximately the same as that of the first embodiment, therefore in Fig. 8, symbols are particularly shown necessary for explanation of difference from the configuration in the first embodiment.

That is, as shown in Fig. 8, suppose that electrical angles made by two lines each connecting the opposite longitudinal ends of the permanent magnets embedded in the slit sections 12A-12C and the rotation center C of the rotor core 11, be $\theta_1$, $\theta_1$, $\theta_3$ in order as viewed from the outside circumference side of the rotor core 11, and amounts of total magnetic flux generated by permanent magnet layers when the rotor is assembled in a rotary electric device, be

$$\phi_1, \phi_2, \phi_3.$$

Suppose that widths of the bridges $13A_1$-$13C_4$ (dimensions in the tangential directions of the slit sections 12A-12C) be $d_{11}$, $d_{12}$,..., $d_{33}$, $d_{34}$, sums of widths of the bridges 13A-13C$_4$, each for respective layers, be $d_1=(d_{11}+d_{12})$, $d_2=(d_{21}+d_{22}+d_{23}+d_{24})$, and $d_3=(d_{31}+d_{32}+d_{33}+d_{34})$, and the saturated magnetic flux density be Bs.

Then, in this embodiment, the following expression (12) is satisfied. The expression (12) is one in which the foregoing expression (1) is applied to the configuration (that is, n=3) of this embodiment. The degree of satisfaction to the expression (12) need not be strictly mathematical, but this expression (12) may be approximately satisfied.

$$(\phi_1 - d_1 Bs) : (\phi_2 - d_2 Bs) : (\phi_3 - d_3 Bs) =$$

$$\theta_1 \cos(\theta_1/4):$$

$$(\theta_2 - \theta_1)\cos((\theta_2 + \theta_1)/4) + \theta_1 \cos(\theta_1/4):$$

$$(\theta_3 - \theta_2)\cos((\theta_3 + \theta_2)/4)$$

$$+(\theta_2 - \theta_1)\cos((\theta_2 + \theta_1)/4)$$

$$+ \theta_1 \cos(\theta_1/4) \tag{12},$$

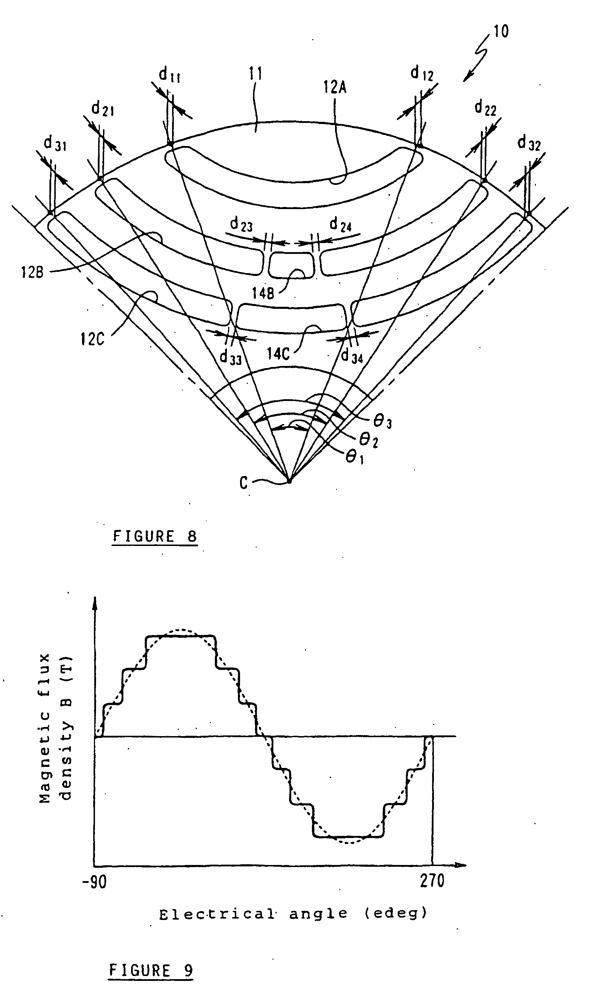

In this embodiment of the permanent magnet 10, the expression (12) is satisfied or approximately satisfied, so that the distribution of magnetic flux density formed in the clearance between the rotor and stator when the rotor is assembled in a rotary electric device, as shown in a solid line in Fig. 9, has a stepped shape very close to a sinusoidal wave (shown in Fig. 9 in a dash line). Approximation of the distribution of magnetic flux density to a sinusoidal wave is clearer when compared with Fig. 13 in which the distribution of magnetic flux density in the prior art is shown. Therefore, according to this embodiment of the permanent magnet rotor 10, compared with a conventional permanent magnet rotor, the distortion factor of the waveform of induced voltage is decreased remarkably, as well as torque ripples and cogging torque.

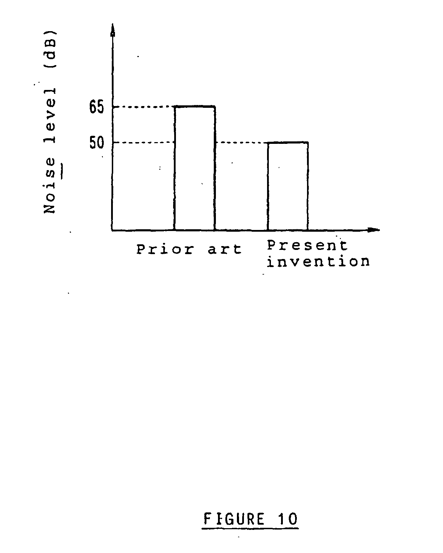

In addition, reduction of the iron loss by higher harmonics results in a decrease in noises without a drop in output. Fig. 10 is a graph of a noise level (overall noise value in the 0-20 kHz range, of an electric motor running at 4000 rpm) at a measuring point 100mm away from the side of a permanent magnet motor incorporating the permanent magnet rotor 10 of this embodiment compared with that of a permanent magnet motor incorporating a conventional permanent magnet rotor, measured in the same condition. The graph shows that the noise level can be decreased by 25% compared with the conventional permanent magnet motor.

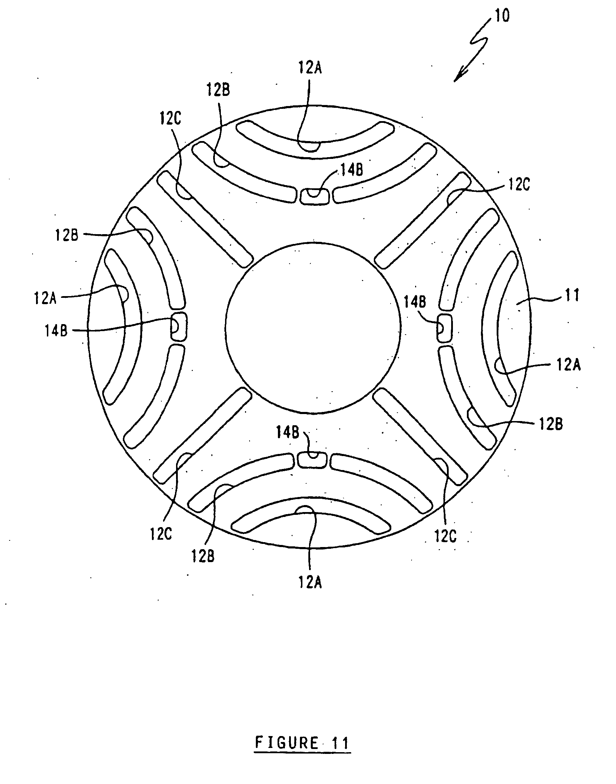

While in the seventh embodiment, no specific values are given for magnetic pole electrical angles $\theta_1 - \theta_n$, our study has proved that values (unit: electrical angle) described below are preferable. Regarding the number of layers, if it is an integer, it means that the permanent magnets are independent in each pole, as in the foregoing embodiments, and if it is an integer plus "0.5," it means that the radially innermost permanent magnets (for example, permanent magnet embedded in the slit section 13C in Fig. 1) are used in common to adjacent poles, which case is specifically shown in Fig. 11.

$$n = 1.5;$$

$$\theta_1 = 110, \theta_2 = 180$$

$$n = 2;$$

$$\theta_1 = 92, \theta_2 = 154$$

$$n = 2.5;$$

$$\theta_1 = 83, \theta_2 = 134, \theta_3 = 180$$

$$n = 3;$$

$$\theta_1 = 77, \theta_2 = 126, \theta_3 = 163$$

$$n = 3.5;$$

$$\theta_1 = 66, \theta_2 = 112, \theta_3 = 147, \theta_4 = 180$$

$$n = 4;$$

$$\theta_1 = 65, \theta_2 = 101, \theta_3 = 133, \theta_4 = 165$$

$$n = 4.5;$$

$$\theta_1 = 58, \theta_2 = 92, \theta_3 = 124, \theta_4 = 153, \theta_5 = 180$$

$$n = 5;$$

$$\theta_1 = 52, \theta_2 = 85, \theta_3 = 116, \theta_4 = 141, \theta_5 = 169$$

According to the embodiments as described above, the distribution of magnetic flux formed in the clearance between the rotor and the stator, has a shape close to a sinusoidal wave, so that the distortion factor of the waveform of induced voltage is decreased, as well as torque ripples and cogging torque.

At least one of the embodiments as described above teaches a permanent magnet rotor with a rotor core having a plurality of permanent magnets, for each magnetic pole, embedded in layers therein, wherein in parts of slit sections in which are embedded said permanent magnets other than the magnet constituting the radially outermost magnet layer of said rotor core, are formed vacant slits in which no permanent magnets are embedded, such that the vacant slit on the radially outer side of said rotor core is larger than that on the inner side thereof; and the amount of total magnetic flux generated by each permanent magnet when the rotor is assembled in a rotary electric device, is larger in the permanent magnet layer on the radially inner side of said rotor core than on the radially outer side thereof.

Since vacant slits are provided having a configuration as described above, and the amount of total magnetic flux generated by each permanent magnet layer when the rotor is assembled in a rotary electric device, is larger for a layer on the radially inner side of said rotor core than on the radially outer side thereof. Therefore, the distribution of magnetic flux density formed in the clearance between the rotor and the stator has a shape, though stepped, close to a sinusoidal wave rather than a rectangular wave. Thus, compared with a conventional permanent magnet rotor, the distortion factor of the waveform of induced voltage is decreased, as well as torque ripples and cogging torque, and noises and vibrations.

At least one of the embodiments as described above teaches a permanent magnet rotor with a rotor core having a plurality of permanent magnets, for each magnetic pole, embedded in layers therein, wherein magnetic poles of said rotor core are constituted by slits in which are embedded permanent magnets of a different characteristic for each pole; the residual magnetic flux density of said permanent magnets is smaller in the layer on the radially inner side of said rotor core than on the radially outer side thereof; and the amount of total magnetic flux generated by each permanent magnet when the rotor is assembled in a rotary electric device, is larger in the permanent magnet layer on the radially inner side of said rotor core than on the radially outer side thereof.

Since in addition, the shape of the distribution of magnetic flux density formed in the clearance between the rotor and the stator, can be made close to a sinusoidal wave rather than a rectangular wave, without vacant slits, so that magnets can be embedded more efficiently in the rotor core, facilitating size reduction.

At least one of the embodiments as described above teaches a permanent magnet rotor with a rotor core having a plurality of permanent magnets, for each magnetic pole, embedded in layers therein, wherein magnetic poles of said rotor core are constituted by slits in which said permanent magnets are embedded; in at least one of said slit sections in layers are embedded a plurality of permanent magnets of different kinds combined; assuming that the sum of the products of the longitudinal length in end view of said rotor core and the residual magnetic flux density of the permanent magnets contained in each layer, divided by the sum of longitudinal lengths, in end view of said rotor core, of all the permanent magnets in each layer, be a mean residual magnetic flux density for each layer, the mean residual magnetic flux density is smaller in the layer on the radially inner side of said rotor core than on the radially outer side thereof; and the amount of total magnetic flux generated by each permanent magnet when the rotor is assembled in a rotary electric device, is larger in the permanent magnet layer on the radially inner side of said rotor core than on the radially outer side thereof.

Since, a plurality of kinds of magnets are embedded in a slit section, so that even if the number of the kinds of available magnets is smaller than that of the slit sections, the permanent magnet rotor is able to produce the same effect as the rotor of the other embodiments, facilitating cost reduction.

In the embodiments, in parts of said slit sections vacant slits in which no permanent magnets are embedded may be additionally formed. Thus, the magnetic characteristics of a permanent magnet layer with a vacant slit is equivalent to that of a permanent magnet layer, without a vacant slit, in which a different kind of magnet is embedded, further facilitating reduction in the kinds of magnets.

At least one of the embodiments as described above teaches a permanent magnet rotor with a rotor core having a plurality of permanent magnets, for each magnetic pole, embedded in layers therein, wherein distances between said permanent magnets in end view of aid rotor core, are differentiated such that they are wider toward the longitudinal ends of the permanent magnets and narrower toward the longitudinal middle portions thereof. The distances between permanent magnets are differentiated, so that as in the other embodiments, the shape of the distribution of magnetic flux density formed in the clearance between the rotor and the stator when the rotor is assembled in a rotary electric device, can be made close to a sinusoidal wave rather than a rectangular wave, Therefore, change in the distribution of magnetic flux density is more moderate compared with a conventional permanent magnet rotor, thereby reducing torque ripples and cogging torque as well as noises and vibrations.

According to preferred embodiments, an angle made by two straight lines each connecting the respective one longitudinal ends of any adjacent permanent magnets in end view of said rotor core and the rotation center thereof, is smaller for the layer on the radially inner side of the rotor core than on the radially outer side thereof, smaller than an angle made by a straight line connecting the center of the magnetic pole and said rotation center and a straight line made by one longitudinal end of said permanent magnet constituting the radially outermost layer and said rotation center, and larger than an angle made by a straight line passing through the space between adjacent poles and said rotation center and a straight line connecting one longitudinal end of said permanent magnet constituting the radially innermost layer and said rotation center. Thus, the shape of the distribution of magnetic flux density formed in the clearance between the rotor and the stator when the rotor is assembled in a rotary electric device, can be made closer to a sinusoidal wave, resulting in a more remarkable reduction in the distortion factor of induced voltage, torque ripples and cogging torque as well as noises and vibrations.

As can be taken from the embodiments, a plurality of layers of magnets are provided in each magnetic pole, and supposing that electrical angles each made by two straight lines each connecting the respective opposite longitudinal ends of one layer of said permanent magnets in end view of said rotor core and the rotation center thereof, be $\theta_1, \theta_2, \theta_3, \ldots \theta_n$ in order as viewed from the outside circumference side of said rotor core, and amounts of total magnetic flux generated by said permanent magnet layers when said rotor core is assembled in a rotary electric device, be $\phi_1, \phi_2, \phi_3, \ldots \phi_n$, the following equation is satisfied or approximately satisfied:

$$(\phi_1 - d_1 BS) : (\phi_2 - d_2\, Bs) :...: (\phi_n - dn\, Bs) =$$

$$\theta_1 \cos(\theta_1/4):$$

$$(\theta_2 - \theta_1)\cos((\theta_2 + \theta_1)/4) + \theta_1\cos(\theta_1/4):$$

$$...: (\theta_n - \theta_{n-1})\cos((\theta_n + \theta_{n-1})/4)$$

$$+(\theta_{n-1} - \theta_{n-2})\cos((\theta_{n-1} + \theta_{n-2})/4)$$

$$+...+(\theta_2 - \theta_1)\cos((\theta_2 + \theta_1)/4)$$

$$+ \theta_1\cos(\theta_1/4) \tag{1},$$

where di (i=1, 2, 3,...n) represents the sum of widths of bridges each connecting the radially outer portions and the radially inner portions of the rotor core with respect to the respective slit sections in which said permanent magnets are embedded, for each layer: and Bs is a saturated magnetic flux density of said rotor core.

In addition, the equation (1) including the electrical angles $\theta_1$ - $\theta_n$ and the amounts of total magnetic flux $\phi_1$-$\phi_n$, is satisfied or approximately satisfied, so that the shape of the distribution of magnetic flux density formed in the clearance between the rotor and the stator when the rotor is assembled in a rotary electric device, can be made close to a sinusoidal wave which is, though stepped, almost ideal, resulting in a very remarkable reduction in the distortion factor of induced voltage, torque ripples and cogging torque as well as noises and vibrations.

. In the embodiments mentioned above said permanent magnets are formed such that bond magnet is filled in said slits and solidified. Bond magnet is used to form the permanent magnets by injection molding, so that the permanent magnets can be embedded in the rotor core even if the shape of the slits is rather complicated. The injection molding using bond magnet may be an ordinary one in which the bond magnet is filled in the slits and solidified, or if the bond magnet is anisotropic, may be an in-magnetic field injection molding in which the bond magnet is filled in the slits and solidified in a magnetic field.

## Claims

1. Permanent magnet rotor with a rotor core (11) having for each magnetic pole (N, S) a plurality of permanent magnets (PM1, PM2, PM3), embedded in layers therein, **characterized in that** the magnetic poles (N, S) of said rotor core (11) are constituted by recesses (12A-12C) in which permanent magnets (PM1, PM2, PM3) of different characteristics are embedded, wherein the residual magnetic flux density ($Br_1$, $Br_2$, $Br_3$) of said permanent magnets (PM1, PM2, PM3) is smaller in the layer on the radially inner side of said rotor core (11) than on the radially outer side thereof.

2. Permanent magnet rotor according to claim 1, **characterized in that** distances between said permanent magnets (PM1, PM2, PM3) in end view of said rotor core (11), are differentiated such that they are wider toward the longitudinal ends of the permanent magnets (PM1, PM2, PM3) and narrower toward the longitudinal middle portions thereof.

3. Permanent magnet rotor according to at least one of the claims 1 or 2, **characterized in that** the recesses and the recess sections are formed as slits and slit sections (12A-C, 14B, 14C).

4. Permanent magnet rotor according to at least one of the claims 1 to 3, **characterized in that** an angle made by two straight lines each connecting the respective one longitudinal ends of any adjacent permanent magnets in end view of said rotor core (11) and a rotation center (C) thereof, is smaller for the layers on the radially inner side of the rotor core (11) than on the radially outer side thereof, smaller than an angle made by a straight line (S1) connecting the center of the magnetic pole (N, S) and said rotation center (C) and a straight line (S2) made by one longitudinal end of said permanent magnet (PM) constituting the radially outermost layer and said rotation center (C), and larger than an angle made by a straight line (S5) passing through the space between adjacent poles (N, S) and said rotation center (C) and a straight line (S4) connecting one longitudinal end of said permanent magnet constituting the radially innermost layer and said rotation center (C).

**5.** Permanent magnet rotor according to at least one of the claims 1 to 4, **characterized in that** a plurality of layers of magnets are provided in each magnetic pole (N, S), and supposing that electrical angles each made by two straight lines each connecting the respective opposite longitudinal ends of one layer of said permanent magnets in end view of said rotor core (11) and the rotation center (C) thereof, be $\theta_1$, $\theta_2$, $\theta_3$, ... $\theta_n$ in order as viewed from the outside circumference side of said rotor core (11), and amounts of total magnetic flux generated by said permanent magnet layers when said rotor core (11) is assembled in a rotary electric device, be $\phi_1$, $\phi_2$, $\phi_3$,...$\phi_n$, the following equation is satisfied:

$$(\phi_1\text{-}d_1\ Bs) : (\phi_2\text{-}d_2\ Bs) : ... : (\phi_n\text{-}dn\ Bs) =$$

$$\theta_1 \cos(\theta_1/4):$$

$$(\theta_2\text{-}\theta_1)\cos((\theta_2+\theta_1)/4)+\theta_1\cos(\theta_1/4):$$

$$...: (\theta_n\text{-}\theta_{n\text{-}1})\ \cos((\theta_n+\theta_{n\text{-}1})/4)$$

$$+ (\theta_{n\text{-}1}\text{-}\theta_{n\text{-}2})\cos((\theta_{n\text{-}1}+\theta_{n\text{-}2})/4)$$

$$+...+ (\theta_2\text{-}\theta_1)\cos ((\theta_2+\theta_1)/4)$$

$$+ \theta_1\cos(\theta_1/4)$$

where di (i=1, 2, 3,...n) represents the sum of widths of bridges (dij) each connecting the radially outer portions and the radially inner portions of the rotor core with respect to the respective recess sections (12A, 12B, 12C) in which said permanent magnets are embedded, for each layer, and Bs is a saturated magnetic flux density of said rotor core.

**6.** Permanent magnet rotor according to at least one of the claims 1 to 5, **characterized in that** said permanent magnets (PM1, PM2, PM3) are formed such that bond magnet is filled in said recesses (12A, 12B, 12C) and solidified.

**7.** Permanent magnet rotor according to at least one of the claims 1 to 6, **characterized in that** in parts of said recess sections vacant slits (14B, 14C) are formed, in which no permanent magnets are embedded.

**8.** Permanent magnet rotor according to at least one of claims 1 to 7, **characterized in that** an amount of total magnetic flux generated by each permanent magnet (PM1, PM2, PM3) on the radially inner side of said rotor core (11) is larger than that on the radially outer side thereof when the rotor is assembled in a rotary electric device.

**Patentansprüche**

**1.** Permanentmagnetrotor mit einem Rotorkem (11), der für jeden Magnetpol (N, S) eine Mehrzahl von Permanentmagneten (PM1, PM2, PM3) hat, die in Schichten darin eingebettet sind, **dadurch gekennzeichnet, dass** die Magnetpole (N, S) des Rotorkerns (11) durch Aussparungen (12A - 12C) gebildet sind, in denen Permanentmagneten (PM1, PM2, PM3) von verschiedenen Charakteristika eingebettet sind, wobei die verbleibende magnetische Flussdichte (Br$_1$, Br$_2$, Br$_2$) der Permanentmagneten (PM1, PM2, PM3) in der Schicht auf der radial inneren Seite des Rotorkems (11) kleiner als auf der radial äußeren Seite desselben ist.

**2.** Permanentmagnetrotor nach Anspruch 1, **dadurch gekennzeichnet, dass** die Abstände zwischen den Permanentmagneten (PM1, PM2, PM3) in der Endansicht des Rotorkems (11) derart unterschiedlich sind, dass sie in Richtung zu den Längsenden der Permanentmagneten (PM1, PM2, PM3) breiter und in Richtung zu den Längsmittelabschnitten derselben enger sind.

**3.** Permanentmagnetrotor nach zumindest einem der Ansprüche 1 oder 2, **dadurch gekennzeichnet, dass** die Aussparungen und die Aussparungsabschnitte als Schlitze und Schlitzabschnitte (12A - C, 14B, 14C) gebildet sind.

**4.** Permanentmagnetrotor nach zumindest einem der Ansprüche 1 bis 3, **dadurch gekennzeichnet, dass** ein Winkel, gebildet durch zwei gerade Linien, von denen jede jeweilige Längsenden aller benachbarten Permanentmagneten in Endansicht des Rotorkems (11) und eine Rotationsmitte (C) desselben verbinden, kleiner ist für die Schichten auf der radial inneren Seite des Rotorkems (11) als auf der radial äußeren Seite desselben, kleiner als ein Winkel, gebildet durch eine gerade Linie (S1), die die Mitte der Magnetpole (N, S) und die Rotationsmitte (C) verbindet und eine gerade Linie (S2), gebildet durch ein Längsende des Permanentmagneten (PM), die die radial äußerste Schicht bilden, und die Rotationsmitte (C), verbindet, und größer als ein Winkel, gebildet durch eine gerade Linie (S5), die durch den Raum zwischen den benachbarten Polen (N, S) und der Rotationsmitte (C) hindurchgeht, und einer geraden Linie (S4), die ein Längsende des Permanentmagneten, der die radial innerste Schicht bildet, und die Rotationsmitte (C) verbindet.

5. Permanentmagnetrotor nach zumindest einem der Ansprüche 1 bis 4, **dadurch gekennzeichnet, dass** eine Mehrzahl von Magnetschichten in jedem Magnetpol (N, S) vorgesehen ist, und angenommen, dass elektrische Winkel, jeweils gebildet durch zwei gerade Linien, die jeweils die gegenüberliegenden Längsenden einer Schicht der Permanentmagneten in Endansicht des Rotorkems (11) und die Rotationsmitte (C) desselben verbinden, seien $\phi_1$, $\phi_2$, $\phi_3$, .... $\phi_n$, in Abfolge wie gesehen von der Seite des Außenumfanges des Rotorkems (11) und die Beträge des magnetischen Flusses, erzeugt durch die Permanentmagnetschichten, wenn der Rotorkern (11) in einer rotierenden elektrischen Vorrichtung montiert ist, seien $\phi_1$, $\phi_2$, $\phi_3$, .... $\phi_n$, die folgende Gleichung erfüllt wird:

$$(\phi_1 - d_1\ Bs) : (\phi_2 - d_2\ Bs) : .... : (\phi_n - dn\ Bs) =$$

$$\theta_1\ cos\ (\theta_1\ /4):$$

$$(\theta_2 - \theta_1)\ cos\ ((\theta_2 + \theta_1\ )/4) + \theta_1\ cos\ (\theta_1\ /4):$$

$$... (\theta_n - \theta_{n-1})cos((\theta_n + \theta_{n-1})/4)$$

$$+ (\theta_{n-1} - \theta_{n-2})\ cos\ ((\theta_{n-1} + \theta_{n-2})/4)$$

$$+ ... + (\theta_2 - \theta_1)\ cos\ ((\theta_2 + \theta_1)/4$$

$$+ \theta_1\ cos\ (\theta_1\ /4)$$

wo di (i = 1, 2, 3, ... n) die Summe der Breiten von Brücken (dij) repräsentiert, die jeweils die radialen äußeren Abschnitte und die radial inneren Abschnitte des Rotorkerns in Bezug auf die jeweiligen Aussparungsabschnitte (12A, 12B, 12C) verbinden, in denen die Permanentmagneten für jede Schicht eingebettet sind, und Bs eine gesättigte magnetische Flussdichte des Rotorkems ist.

6. Permanentmagnetrotor nach zumindest einem der Ansprüche 1 bis 5, **dadurch gekennzeichnet, dass** die Permanentmagneten (PM1, PM2, PM3) derart gebildet sind, dass ein Haftmagnet in die Aussparungen (12A, 12B, 12C) verfestigt ist.

7. Permanentmagnetrotor nach zumindest einem der Ansprüche 1 bis 6, **dadurch gekennzeichnet, dass** in Teilen der Aussparungsabschnitte unbesetzte Schlitze (14B, 14C) gebildet sind, in denen keine Permanentmagneten eingebettet sind.

8. Permanentmagnetrotor nach zumindest einem der Ansprüche 1 bis 7, **dadurch gekennzeichnet, dass** ein Betrag der durch jeden Permanentmagneten (PM1, PM2, PM3) erzeugten magnetischen Gesamt-Flussdichte auf der radial inneren Seite des Rotorkems (11) größer als jener auf der radial äußeren Seite desselben ist, wenn der Rotor in einer Rotationselektrovorrichtung zusammengebaut ist.

**Revendications**

1. Rotor à aimants permanents ayant un noyau de rotor (11) ayant pour chaque pôle magnétique (N, S) une pluralité d'aimants permanents (PM1, PM2, PM3), enrobés dans des couches de celui-ci, **caractérisé en ce que** les pôles magnétiques (N, S) dudit noyau de rotor (11) sont constitués par des évidements (12A à 12C) dans lesquels des aimants permanents (PM1, PM2, PM3) de différentes caractéristiques sont enrobés, dans lequel la densité de flux

magnétique résiduel ($Br_1$, $Br_2$, $Br_3$) desdits aimants permanents (PM1, PM2, PM3) est plus petite dans la couche située du côté radialement intérieur dudit noyau de rotor (11) que du côté radialement extérieur de celui-ci.

2. Rotor à aimants permanents selon la revendication 1, **caractérisé en ce que** les distances entre lesdits aimants permanents (PM1, PM2, PM3), dans une vue d'extrémité dudit noyau de rotor (11 ), sont différenciées de telle sorte qu'elles sont plus larges en direction des extrémités longitudinales des aimants permanents (PM1, PM2, PM3) et plus étroites en direction des parties médianes longitudinales de ceux-ci.

3. Rotor à aimants permanents selon la revendication 1 ou 2, **caractérisé en ce que** les évidements et les tronçons d'évidement sont formés sous forme de fentes et tronçons de fente (12A à 12C, 14B, 14C).

4. Rotor à aimants permanents selon l'une quelconque des revendications 1 à 3, **caractérisé en ce qu'**un angle constitué par deux lignes droites reliant chacune une extrémité respective des extrémités longitudinales de l'un quelconque d'aimants permanents adjacents dans une vue d'extrémité dudit noyau de rotor (11) et un axe de rotation (C) de celui-ci, est plus petit pour les couches situées du côté radialement intérieur du noyau de rotor (11 ) que du côté radialement extérieur de celui-ci, plus petit qu'un angle fait par une ligne droite (S1) reliant le milieu du pôle magnétique (N, S) et ledit axe de rotation (C) et une ligne droite (S2) constituée par une extrémité longitudinale dudit aimant permanent (PM) constituant la couche radialement la plus à l'extérieur et ledit axe de rotation (C), et plus grand qu'un angle fait par une ligne droite (S5) passant par l'espace existant entre des pôles adjacents (N, S) et ledit axe de rotation (C) et une ligne droite (S4) reliant une extrémité longitudinale dudit aimant permanent constituant la couche radialement la plus à l'intérieur et ledit axe de rotation (C).

5. Rotor à aimants permanents selon l'une quelconque des revendications 1 à 4, **caractérisé en ce qu'**une pluralité de couches d'aimants est agencée dans chaque pôle magnétique (N, S) et en supposant que les angles électriques, chacun constitué par deux lignes droites reliant chacune les extrémités longitudinales opposées respectives d'une couche dedits aimants permanents dans une vue d'extrémité dudit noyau de rotor (11) et l'axe de rotation (C) de celui-ci sont $\theta_1$, $\theta_2$, $\theta_3$, ... $\theta_n$ dans l'ordre tel que vu à partir du côté de la circonférence extérieure dudit noyau de rotor (11), et les quantités de flux magnétique total produites par lesdites couches d'aimants permanents lorsque ledit noyau de rotor (11) est assemblé dans un dispositif électrique rotatif sont $\phi_1$, $\phi_2$, $\phi_3$, ... $\phi_n$, l'équation qui suit est satisfaite :

$$(\phi_1 - d_1 Bs) : (\phi_2 - d_2 Bs) : ... : (\phi_n - d_n Bs) =$$

$$\theta_1 \cos(\theta_1/4) :$$

$$(\theta_2 - \theta_1) \cos((\theta_2 + \theta_1)/4) + \theta_1 \cos(\theta_1/4) :$$

$$... (\theta_n - \theta_{n-1}) \cos((\theta_n + \theta_{n-1})/4)$$

$$+ (\theta_{n-1} + \theta_{n-2}) \cos((\theta_{n-1} + \theta_{n-2})/4)$$

$$+ ... + (\theta_2 - \theta_1) \cos((\theta_2 + \theta_1)/4)$$

$$+ \theta_1 \cos(\theta_1/4)$$

où $d_i$ (i = 1, 2, 3, ..., n) représente la somme des largeurs des ponts (dij) reliant chacun les parties radialement extérieures et les parties radialement intérieures du noyau de rotor concernant les tronçons d'évidement respectifs (12A, 12B, 12C) dans lesquels lesdits aimants permanents sont enrobés, pour chaque couche, et Bs est une densité de flux magnétique saturé dudit noyau de rotor.

6. Rotor à aimants permanents selon l'une quelconque des revendications 1 à 5, **caractérisé en ce que** lesdits aimants permanents (PM1, PM2, PM3) sont formés de telle sorte qu'un aimant de liaison est rempli dans lesdits évidements (12A, 12B, 12C) et solidifié.

7. Rotor à aimants permanents selon l'une quelconque des revendications 1 à 6, **caractérisé en ce que** dans des parties desdits tronçons d'évidement, des fentes inoccupées (14B, 14C) sont formées, dans lesquelles aucun aimant permanent n'est enrobé.

8. Rotor à aimants permanents selon l'une quelconque des revendications 1 à 7, **caractérisé en ce qu'**une quantité de flux magnétique total produite par chaque aimant permanent (PM1, PM2, PM3) sur le côté radialement intérieur dudit noyau de rotor (11) est plus grande que celle sur le côté radialement extérieur de celui-ci lorsque le rotor est assemblé dans un dispositif électrique rotatif.

FIGURE 1

$L_2 = L_{21} + L_{22}$

$L_3 = L_{31} + L_{32}$

FIGURE 2

FIGURE 3

FIGURE 4

FIGURE 5

FIGURE 6

FIGURE 7

FIGURE 8

FIGURE 9

FIGURE 10

FIGURE 11

FIGURE 12

FIGURE 13